(19) Europäisches Patentamt / European Patent Office / Office européen des brevets

(11) **EP 2 141 827 B1**

(12) **FASCICULE DE BREVET EUROPEEN**

(45) Date de publication et mention
de la délivrance du brevet:
**12.08.2015 Bulletin 2015/33**

(51) Int Cl.:
**H04B 7/08** *(2006.01)* **H04L 7/00** *(2006.01)*

(21) Numéro de dépôt: **09162543.4**

(22) Date de dépôt: **12.06.2009**

(54) **Terminal mobile d'un système de communication par onde radiofréquence de type DECT et procédé de gestion des antennes de ce terminal**

Mobiles Endgerät eines Kommunikationssystems über Funkwellen vom Typ DECT und Steuerungsverfahren der Antennen dieses Endgeräts

Mobile terminal of a DECT system for communication by radio waves and method for managing the antennas of this terminal

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.06.2008 FR 0853915**

(43) Date de publication de la demande:
**06.01.2010 Bulletin 2010/01**

(60) Demande divisionnaire:
**09175103.2 / 2 190 131**

(73) Titulaire: **SAGEM DEFENSE SECURITE**
**92100 Boulogne Billancourt (FR)**

(72) Inventeur: **Brevalle, Christophe**
**75015 Paris (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**WO-A-96/02984 US-B1- 6 690 927**

**Description**

La présente invention concerne un procédé de communication entre un terminal dit esclave et un terminal dit maître d'un système de communication par onde radiofréquence de type DECT. Chaque terminal est équipé d'une pluralité d'antennes et comportant des moyens pour mesurer le niveau de puissance d'un signal reçu par chaque antenne et des moyens pour sélectionner l'une de ces antennes comme antenne de réception par comparaison des niveaux de puissance ainsi mesurés.

Une communication par onde radiofréquence est utilisée pour déployer dans un environnement donné un service de type audio et/ou de transfert de données dans lequel des terminaux de communication communiquent entre eux des données qui sont soit vocales, soit autres, telles que par exemple des images, des fichiers de données, etc.

Une communication par onde radiofréquence consiste à transporter ces données par des ondes radiofréquences qui se propagent dans cet environnement afin que le signal porteur de ces données soit acheminé d'un terminal émetteur vers soit un terminal récepteur soit plusieurs terminaux récepteurs dans le cas où le signal est diffusé.

La présente invention est décrite par la suite dans le cas d'un réseau défini par les normes DECT (Digital Enhanced Cordless Télécommunications en anglais) mais l'invention est destinée à être mise en oeuvre pour d'autres réseaux de communication de ce type, c'est-à-dire des réseaux de communication TDMA avec synchronisation en temps et en fréquence des terminaux de communication, appelés par là suite terminaux esclaves, avec un terminal de communication, appelé par la suite terminal maître, et ce à partir d'un signal de balise diffusé par ce terminal maître, chacun des terminaux étant équipé d'une pluralité d'antennes et comportant des moyens permettant de mettre en oeuvre un mécanisme de diversité d'antennes, c'est-à-dire des moyens pour mesurer le niveau de puissance d'un signal reçu par chaque antenne et des moyens pour sélectionner l'une de ces antennes comme antenne de réception par comparaison des niveaux de puissance ainsi mesurés.

Un réseau de type DECT est un réseau TDMA, c'est-à-dire un réseau dans lequel les données échangées entre terminaux sont transmises sous forme de données numériques dans des intervalles de temps (time slots en anglais). On utilisera le terme *slot* pour désigner un tel intervalle de temps car c'est le terme qui est utilisé par l'homme du métier. On l'écrira en italique pour toutefois marquer son origine anglo-saxonne.

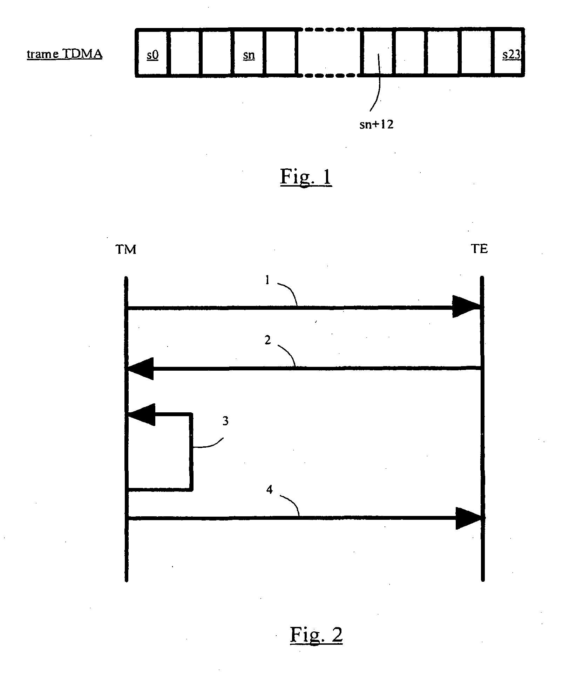

L'accès multiple par division de temps (TDMA) permet à différents utilisateurs de partager, au cours du temps, l'utilisation d'une bande de fréquence donnée, partage qui est défini par une trame dite trame TDMA qui fixe la disposition temporelle des *slots.* La trame TDMA est définie, dans le cas particulier d'un système basé sur les normes DECT, comme étant un ensemble constitué de 24 *slots* successifs notés s0 à s23 représentés à la Fig. 1. La durée de la trame TDMA est alors au moins égale à la somme des durées de ces 24 *slots.* Selon la norme DECT, la durée d'une trame est fixée à 10ms. Les douze premiers *slots* sont dédiés à l'émission du terminal maître vers le terminal esclave et les douze derniers *slots* sont dédiés à l'émission du terminal esclave vers le terminal maître. La trame DECT est ainsi partagée en deux parties de 5ms chacune.

De plus, dans un réseau de type DECT, le terminal maître diffuse un signal de balise que tout autre terminal esclave doit recevoir pour pouvoir, d'une part, se synchroniser en temps et en fréquence avec le terminal maître et, d'autre part, que le terminal maître alloue des ressources radio pour chaque terminal esclave et communique à chaque terminal esclave les ressources radio qui lui sont allouées pour que la communication s'établisse et se maintienne entre lui et le terminal esclave.

L'allocation des ressources radio par un terminal maître pour l'établissement d'une communication avec un terminal esclave consiste à dédier une porteuse constituée de deux *slots* de trame TDMA, l'un référencé sn sur la Fig. 1 pour l'émission de données et l'autre référencé s(n+12) pour la réception de données.

Enfin, pour pallier l'atténuation des ondes radiofréquences dues à des réflexions sur des obstacles situés sur le chemin reliant deux terminaux, la norme DECT a défini un mécanisme de diversité d'antennes et un mécanisme dit de *timing advance* qui sont mis en oeuvre par un protocole défini par la norme ETSI EN 300 175-3 V1.4.2 (1999-06) Part 3: Médium Access Control (MAC) layer.

Le mécanisme de diversité d'antennes est habituellement mis en oeuvre afin d'améliorer la qualité des signaux reçus, et notamment de s'affranchir des trajets multiples dus à la réflexion des ondes sur des obstacles, tels que des bâtiments, situés entre les terminaux alors en communication. Un tel mécanisme de diversité d'antennes est par exemple décrit dans le document WO 96/02984 dans lequel les données transmises dans un *slot* sont accompagnées d'un préambule comportant des première et seconde parties servant à la mesure de la puissance et/ou de la qualité du signal reçu par chaque antenne du terminal. L'antenne qui a donné la meilleure qualité de réception ou la puissance la plus élevée est celle qui est choisie pour la réception de signaux de trafic par ledit terminal.

Le mécanisme de *timing advance* est un mécanisme classiquement utilisé en communication numérique. Il consiste à envoyer à chaque terminal esclave une valeur de temps, définie selon la distance entre ce terminal esclave et le terminal maître, afin que le terminal esclave avance ou retarde l'émission de ses trames.

La Fig. 2 représente schématiquement les échanges protocolaires entre un terminal esclave TE et un terminal maître TM qui sont requis par la norme DECT préalablement à la mise en oeuvre du mécanisme de diversité d'antennes et de *timing advance*.

Selon la norme DECT, les mécanismes de diversité d'antennes et de *timing advance* requièrent qu'une communication soit établie entre le terminal esclave TE et le terminal maître TM, c'est-à-dire que le terminal esclave TE ait reçu la porteuse qui lui est allouée par le terminal maître TM pour cette communication. Pour cela, le terminal maître TM envoie à tous les terminaux esclaves via un signal de balise qu'il est apte à échanger des trames à préambule long (étape 1) lors d'une communication. Un terminal esclave TE, qui veut établir une communication avec le terminal maître TM, lui répond qu'il est également apte à échanger des trames à préambule long via un message « quality » (étape 2). Dès lors, les deux terminaux échangent des trames à préambule long et reçoivent ces trames en mettant en oeuvre le mécanisme de diversité d'antennes (étape 3). De plus, lorsqu'il est en communication, le terminal maître TM peut établir la durée de propagation aller/retour de l'onde et ainsi déterminer la distance qui le sépare du terminal esclave TE. Le terminal maître TM détermine alors une première valeur de *timing advance* en fonction de cette distance et l'envoie au terminal esclave TE de manière à ce que le terminal esclave TE retarde ou avance son temps de début d'émission de trame (étape 4).

Si le terminal esclave TE n'est pas apte à échanger des trames à préambule long, le mécanisme de diversité n'est pas mis en oeuvre et le type de trames échangées au cours de la communication est une trame à préambule normal, c'est-à-dire une trame comportant un champ S suivie d'un champ D relatif aux données utiles à transmettre. On peut noter que le mécanisme de *timing advance* est toutefois mis en oeuvre.

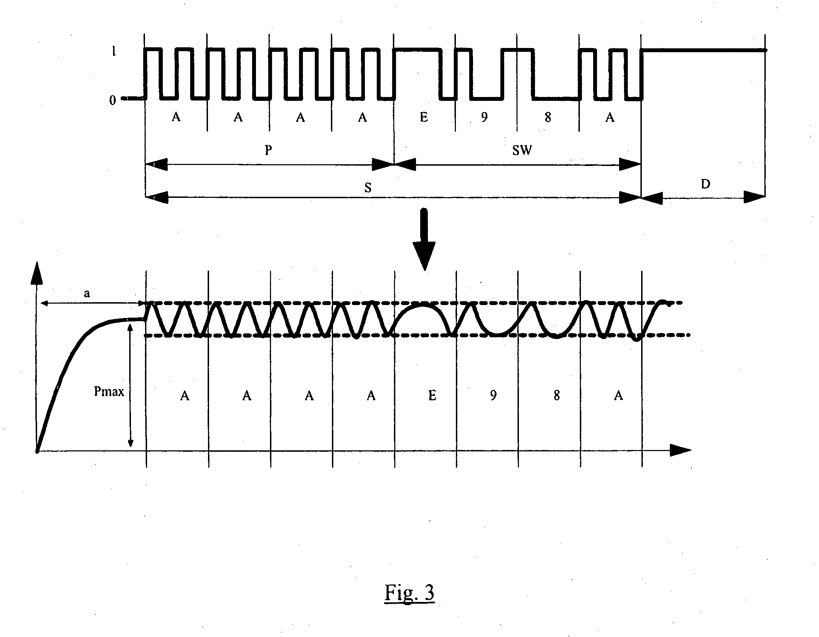

La Fig. 3 représente schématiquement l'évolution temporelle d'une trame DECT à préambule normal. En haut de la Fig. 3 est représentée la version numérique de la trame DECT modulée tandis que, en bas de la Fig. 3, est représentée la version analogique de la trame DECT à moduler.

Le champ S comporte un préambule P de 16 bits et un mot de synchronisation SW également de 16 bits. Le préambule P est subdivisé en 4 mots de 4 bits chacun dont les valeurs hexadécimales sont respectivement 0xA, 0xA, 0xA, 0xA (ou 0x5, 0x5, 0x5, 0x5 comme on le verra par la suite), et le mot de synchronisation SW est subdivisé en 4 mots de 4 bits chacun dont les valeurs hexadécimales sont respectivement 0xE, 0x9, 0x8, 0xA (ou 0x1, 0x6, 0x7, 0x5 comme on le verra également par la suite). On peut noter que là puissance nominale d'émission de la trame augmente graduellement d'une valeur nulle à une valeur maximale $P_{max}$ pendant une durée a dite d'attaque.

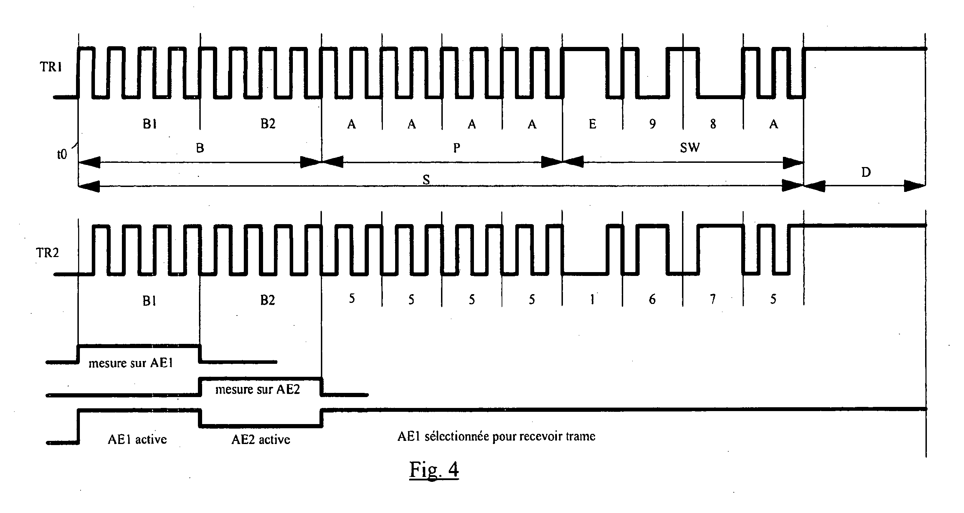

La Fig. 4 représente schématiquement l'évolution temporelle d'une trame DECT à préambule long. A la trame DECT de la Fig. 3 est ajouté, en son début, un mot B de 16 bits alternativement égaux à 0 et 1.

Lorsqu'un terminal émetteur, par exemple le terminal maître TM, émet une trame à préambule long TR1 à destination d'un autre terminal, par exemple le terminal esclave TE, le terminal maître TM attend la réception d'une trame à préambule long TR2 émis par le terminal esclave TE. Le mot B de la trame TR2 est complémentaire du mot B de la trame TR1, c'est-à-dire que lorsqu'un bit du mot B de la trame TR1 vaut 0, celui de la trame TR2 vaut 1 et réciproquement, les 4 mots du préambule P de la trame TR1 ont pour valeurs hexadécimales 0xA, 0xA, 0xA, 0xA tandis que ceux de la trame TR2 ont pour valeurs 0x5, 0x5, 0x5, 0x5 et les 4 mots du mot de synchronisation SW de la trame TR1 ont pour valeurs hexadécimales 0xE, 0x9, 0x8, 0xA tandis que ceux de la trame TR2 ont pour valeurs hexadécimales 0x1, 0x6, 0x7, 0x5. Les valeurs hexadécimales des mots du préambule P et du champ de synchronisation SW de la trame TR2 sont donc également complémentaires des valeurs hexadécimales des mots du préambule P et du champ de synchronisation SW de la trame TR1.

Lorsque la trame TR2 est reçue, le terminal maître TM mesure le niveau de puissance du signal reçu (encore appelé mesure RSSI = Received Signal Strength Indication en anglais) sur une première antenne AE 1, pendant le premier octet B1 du mot B de la trame TR2, et le niveau de puissance du signal reçu sur une seconde antenne AE2, pendant le second octet B2 du mot B. On peut noter que les instants de début de ces mesures ainsi sont préalablement déterminés à partir de l'instant t0 de début d'envoi de la trame TR1 par le terminal maître TM. De plus, la durée de ces mesures est égale à la durée d'un octet du mot B.

Le terminal maître TM sélectionne alors l'une des deux antennes AE1 ou AE2 comme antenne de réception, en l'occurrence celle sur laquelle le niveau de puissance mesuré est le plus élevé. Le reste de la trame TR2 est alors reçue, préambule P, champs de synchronisation SW et données D, à partir de cette antenne de réception ainsi sélectionnée en l'occurrence l'antenne AE1 selon l'exemple de la Fig. 4.

L'inventeur a observé que le mécanisme de diversité d'antennes, proposé par la norme DECT, en plus de nécessiter que les terminaux soient en communication, n'est opérant que lorsque la distance relative entre terminaux reste faible.

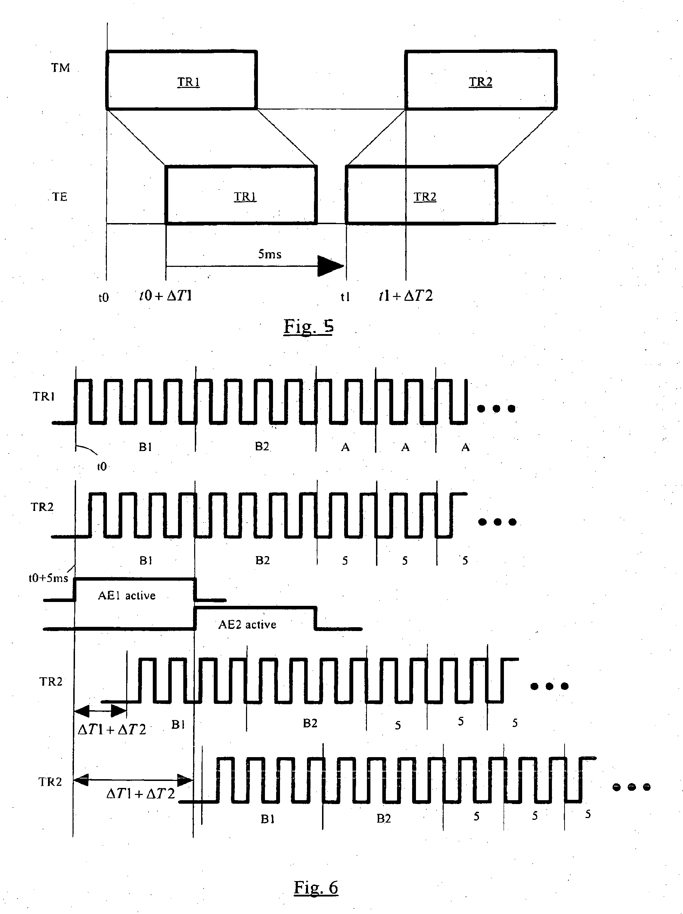

La Fig. 5 est un chronogramme qui illustre la transmission d'une trame TR1 entre un terminal maître TM et un terminal esclave TE distant l'un de l'autre.

Supposons que le terminal maître TM émette une trame TR1 d'un signal à un instant t0. Du fait de la propagation de l'onde porteuse de cette trame dans l'air, cette onde se propage approximativement à la vitesse de la lumière soit à $v = 0,3 km/\mu s$. Le terminal esclave TE situé à une distance D1 reçoit cette trame TR1 avec un décalage de temps $\Delta T1 = \dfrac{D1}{v}$. Par ailleurs, lorsque le terminal esclave TE émet à son tour une trame TR2 à un instant t1 en réponse à la trame TR1, le terminal maître TM la reçoit avec un décalage $\Delta T2 = \dfrac{D2}{v}$ par rapport à l'instant t1 avec D2 la distance séparant le terminal maître TM du terminal esclave TE. Dans le cas où la distance entre les deux terminaux est restée la même depuis l'émission de la trame TR1, les distances D1 et D2 sont égales à une distance D. Selon la norme DECT, l'instant t1 est défini 5ms après le début de la réception du signal TR1, c'est-à-dire que t1 = t0+$\Delta$T1+ 5ms.

Le cumul des retards de propagation des ondes $\Delta$T1+$\Delta$T2 n'est pas problématique lorsque les terminaux sont distants entre eux de quelques mètres. Par contre, lorsque cette distance relative augmente, le cumul des retards de propagation des ondes augmente aussi, provoquant alors l'arrivée de plus en plus tardive de la trame TR2 sur le terminal TM. La mesure RSSI, faite à partir de la trame TR2, est alors faussée, comme on le verra par là suite, ce qui a pour conséquence de fausser la sélection d'antenne de réception. Le cumul des retards de propagation, lorsqu'il devient important est donc pénalisant car toute demande d'allocation de porteuse, ainsi que tout message CLMS (Connection Less Message Service), se feront sur une antenne qui ne sera alors pas sélectionnée à partir de mesures RSSI correctes mais sélectionnée par défaut sur la seule antenne qui reçoit encore du signal à ce moment. Le mécanisme de diversité d'antennes est alors inopérant.

La Fig. 6 illustre ce problème de limitation de l'utilisation du mécanisme de diversité d'antennes défini par la norme DECT lorsque les distances entre terminaux deviennent importantes.

Le terminal TM émet une trame à préambule long TR1 du signal de balise à l'instant t0. A l'instant t0+5ms, instant auquel le terminal maître TM s'attend à recevoir une trame TR2, le terminal maître TM active le mécanisme de diversité d'antennes en activant le début de la mesure RSSI sur l'antenne AE1 pour une durée d'un octet DECT.

Le terminal esclave TE, se trouvant proche du terminal maître, émet une trame TR2 à l'instant t1. De part leur proximité, le cumul des retards de propagation des ondes n'induit aucun décalage de temps significatif ($\Delta T1 = \Delta T2 \approx 0$) et la trame TR2 est reçue quasiment à l'instant t0+5ms. La mesure du niveau de puissance sur l'antenne AE1 est alors prise essentiellement sur l'octet B1 et la mesure du niveau de puissance sur l'antenne AE2 est prise sur l'octet B2. Les mesures RSSI sont correctes.

Le terminal esclave TE s'éloigne du terminal maître TM et émet la trame TR2. Les valeurs de $\Delta T1$ et de $\Delta T2$ augmentent et le cumul de ces retards de propagation des ondes devient significatif. Ainsi, la trame TR2, émise par le terminal esclave TE va être reçue à l'instant t0+ $\Delta T1$ + $\Delta T2$ +5ms et non plus à l'instant t0+5ms comme s'y attend le terminal maître TM. La mesure du niveau de puissance sur l'antenne AE1 s'en trouve alors faussée du fait que seule une partie des bits dé l'octet B1 est maintenant prise en compte dans la mesure.

Le terminal esclave TE s'éloigne encore du terminal TM et émet la trame TR2. Les valeurs de $\Delta T1$ et de $\Delta T2$ augmentent en conséquence jusqu'à ce que aucun bit: de l'octet B1 ne participe à la mesure du niveau de puissance sur l'antenne AE1 alors que la mesure du niveau de puissance sur l'antenne AE2 peut toujours se faire sur les bits du mot B1.

Ainsi, le mécanisme de diversité d'antennes est prévu par la norme DECT pour être opérationnel à courte distance. Lorsque ces distances augmentent, la mesure du niveau de puissance sur l'antenne AE1 diminue de plus en plus jusqu'à ce que cette mesure soit nulle, cas qui se produit lorsque la distance entre les terminaux est supérieure à une distance maximale de (0.3*0.868*8)/2 = 1.01416 km, selon la norme DECT, en considérant un trajet aller et retour et que un bit DECT a une durée de $0,868\mu s$.

En effet, prenons l'exemple d'une distance entre les terminaux TM et TE égale à 1,2 km. Le cumul des retards de propagation (aller et retour) des ondes est de $8\mu s$. Or, ce cumul des retards en termes de bits DECT est par conséquent de $\dfrac{8}{0,868} = 9,21$ bits, ce qui est supérieur aux 8 bits (un octet) qui sont dédiés à la mesure du niveau de puissance pour l'antenne AE1. En conséquence, le mécanisme de diversité d'antennes n'est plus opérationnel à une telle distance car l'antenne AE2 sera toujours sélectionnée puisqu'aucun signal n'est présent sur l'antenne AE1 au moment de la mesure RSSI sur cette antenne.

Dans certaines applications, par exemple de type militaire, il est souhaitable que le mécanisme de diversité d'antennes reste opérationnel lorsque la distance relative entre terminaux s'accroît fortement. Afin de pouvoir conserver, tout de même, l'usage du mécanisme de diversité d'antennes, l'inventeur a observé que la taille du préambule long de la trame doit être prolongée d'au moins une durée égale à deux fois la durée de propagation d'une onde entre le terminal maître et un terminal esclave lorsque ces terminaux sont situés à la distance maximale souhaitée.

Le problème qui se pose alors est que la norme DECT ne prévoit pas qu'un préambule long puisse être allongé ce qui limite l'utilisation du mécanisme de diversité d'antennes tel que défini par cette norme.

A cet effet, l'inventeur a observé qu'en maintenant la puissance d'émission de trame à une valeur prédéfinie suite à la durée d'attaque pendant une durée au moins égale au cumul des retards de propagation (aller/retour) maximal souhaité des ondes, la distance relative entre terminaux peut être importante tout en conservant opérationnel le mécanisme de diversité d'antennes de la norme DECT.

Selon une caractéristique, le terminal comporte des moyens (MM) pour maintenir le niveau de la puissance d'émission de trame à préambule long d'un signal à émettre à une valeur constante pendant une durée (M), dite de maintien, et des moyens (EM) pour émettre ledit signal pendant ladite durée de maintien. La durée de maintien est égale à deux fois la durée de propagation d'une onde entre ledit terminal et un autre terminal situés l'un de l'autre à une distance maximale prédéterminée, augmentée de la durée de propagation dans les circuits radiofréquences. La valeur constante est définie telle que la mesure du signal reçu sur une antenne pendant une partie de la durée de maintien égale à la durée d'un octet du préambule long est équivalente à la mesure du niveau de puissance d'un signal reçu qui serait réalisée à partir d'un octet du préambule long.

De préférence, la valeur constante est égale à la valeur de puissance d'émission maximale de la trame.

Ainsi, le niveau de puissance mesuré d'un signal reçu pendant cette durée de maintien est équivalent au niveau de puissance mesuré sur un octet d'un mot du préambule long, permettant ainsi d'augmenter la distance entre terminaux en augmentant la durée de maintien.

Un signal transmis par un réseau de communication est modulé en fréquence côté émetteur et démodulé côté récepteur. Dans le cas d'une trame DECT comportant un préambule long, la démodulation d'une trame reçue débute à un instant fixé au premier bit du préambule long, c'est-à-dire dès le premier bit de l'octet B1 lorsque la distance entre terminaux est nulle.

L'inventeur a observé que l'activation de la démodulation perturbait l'évolution temporelle de la puissance du signal reçu ce qui faussait la mesure du niveau de puissance par antenne.

Selon une caractéristique, le terminal comporte des moyens pour contraindre la démodulation d'un signal reçu à débuter à partir de l'instant fixé au premier bit du préambule normal de la trame à préambule long quand la distance entre les deux terminaux est nulle.

Cette caractéristique fiabilise la mesure du niveau de puissance sur chaque antenne.

Pour qu'une communication par onde radiofréquence sur de tels réseaux soit de qualité acceptable, il faut que les ondes radiofréquences porteuses de données à transmettre ne soient pas excessivement atténuées entre le terminal maître et le terminal esclave avec qui il est en communication. En particulier, il est nécessaire que le niveau de puissance des ondes radiofréquences porteuses du signal de balise soit suffisant afin que le terminal esclave puisse se synchroniser avec le terminal maître et établir une nouvelle communication.

L'atténuation du niveau de puissance d'une onde radiofréquence est due, notamment, au masquage de l'antenne par le support qui porte le terminal tel qu'une personne ou un véhicule. En effet, une partie de ce support tel que par exemple la tête d'une personne ou une autre partie de son corps, peut provoquer dans certaines situations l'atténuation de cette onde et former ainsi ce qui est couramment appelé des zones d'ombre, c'est-à-dire des zones où cette partie du support masque l'antenne de réception.

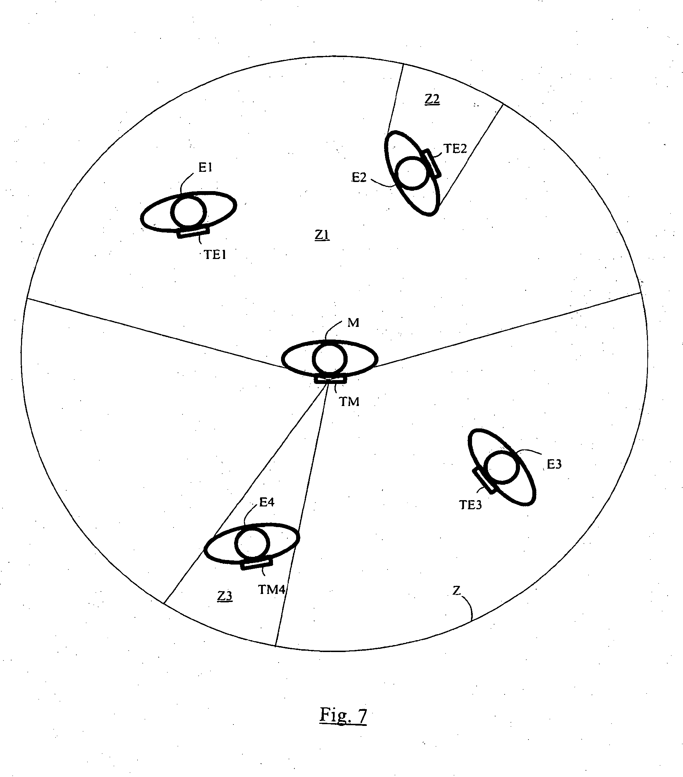

A titre d'illustration, à la Fig. 7, est représenté un exemple d'un système de communication par onde radiofréquence dans le cas où chaque terminal, qu'il soit maître ou esclave, est porté par une personne susceptible de se déplacer à tout moment et où chaque terminal comporte une pluralité d'antennes montées solidaires sur le terminal, lui-même fixé sur le poitrail de la personne. Chaque terminal est pourvu d'un mécanisme de diversité d'antennes qui lui permet de sélectionner l'antenne de réception sur laquelle est mesuré le niveau de puissance le plus élevé.

Selon cet exemple, un terminal maître TM est porté par une personne M que l'on suppose figée dans une position, et chaque autre personne Ei (i=1 à 4) qui porte un terminal esclave TEi se trouve également figée dans une position particulière vis-à-vis de la personne M et à la même distance de la personne M. Supposons que le terminal maître TM diffuse un signal de balise dans la zone Z dont le niveau de puissance est suffisant pour que chaque terminal esclave TEi puisse recevoir ce signal.

Considérons maintenant les différentes positions relatives des personnes Ei vis-à-vis de la personne M et leur influence sur la qualité de la transmission entre les différentes antennes.

Tout d'abord, considérons la personne M. Une des antennes de son terminal TM diffuse un signal de balisé mais du fait que l'antenne est solidaire du terminal TM et que le terminal TM est positionné sur le poitrail de la personne M, le niveau de puissance du signal de balise n'est pas homogène sur toute la zone Z. En effet, le corps de la personne M crée une zone d'ombre Z1 pour cette antenne qui se situe grossièrement sur l'arrière de la personne M. On peut-noter que les antennes du terminal TM étant toutes solidaires du terminal TM fixé sur le poitrail de la personne M, une zone d'ombre est créée par le corps de la personne quelle que soit l'antenne utilisée pour la diffusion du signal de balise.

Ainsi, le niveau de puissance du signal de balise, dans la zone Z1 est toujours atténué par rapport au niveau de puissance de ce signal dans le reste de la zone Z.

Les personnes E1 et E2, qui se trouvent dans cette zone d'ombre Z1, reçoivent donc un signal de balise atténué. Cette atténuation est d'autant plus importante pour la personne E2, du fait de sa position relative par rapport à la personne M. En effet, chaque antenne du terminal TE2 se trouve dans une zone d'ombre Z2 provoquée par le corps de la personne E2, induisant ainsi une atténuation supplémentaire du signal de balise. La personne E1, quant à elle, reçoit le signal de balise d'un niveau de puissance plus élevé du fait qu'aucune zone d'ombre sur les antennes du terminal TE1 n'est provoquée par le corps de la personne E1.

La personne E3 est positionnée de sorte que les antennes de son terminal TE3 reçoivent le signal de balise sans atténuation. On rappelle qu'ici l'influence de la distance séparant les terminaux sur l'atténuation du signal émis n'est pas considérée du fait que tous les terminaux esclaves sont à la même distance de la personne M.

Enfin, la personne E4 est positionnée de sorte que son corps crée une zone d'ombre Z3 pour les antennes de son terminal provoquant l'atténuation du signal de balise reçu.

Les systèmes de communication par onde radiofréquence dans lesquels les terminaux de communication sont portés par des supports susceptibles de se déplacer les uns par rapport aux autres et qui comportent chacun une pluralité d'antennes, sont des systèmes qui ne permettent pas d'assurer une qualité de transmission stable du fait que ces antennes peuvent être masquées par le support qui les portent créant ainsi des zones d'ombres sur ces antennes. Ainsi, pour des personnes placées à une même distance l'une de l'autre, le bilan de liaison radio peut être très différent. En effet, l'inventeur a observé que certaines configurations des supports les uns par rapport aux autres provoquaient la rupture de la réception du signal de balise par un terminal esclave TEi, interdisant alors à ce terminal esclave d'établir une communication avec le terminal maître TM. De même, certaines configurations des supports les uns par rapport aux autres provoquaient la rupture de réception de signaux de trafic par un terminal esclave TEi, rompant alors la communication qui était établie entre ce terminal esclave TEi et le terminal maître M.

Ces différences de bilan de liaison radio provoquent chez l'utilisateur la sensation que le terminal de communication a un fonctionnement instable et que sa portée est aléatoire.

L'un des buts de la présente invention est de pallier ce problème de zones d'ombres en positionnant de manière particulière les antennes de chaque terminal.

A cet effet, l'invention concerne un terminal mobile d'un système de communication par onde radiofréquence de type DECT, installé sur un support susceptible de se déplacer, ledit terminal étant équipé d'une pluralité d'antennes et comportant des moyens pour mesurer le niveau de puissance d'un signal reçu par chaque antenne et des moyens pour sélectionner l'une de ces antennes comme antenne de réception par comparaison des niveaux de puissance ainsi mesurés. Le terminal est caractérisé en ce que les antennes sont positionnées sur des parties dudit support de manière à ce que chaque zone d'ombre de chaque antenne, qui est provoquée par une partie du support, est couverte par une autre antenne dudit terminal.

Le positionnement particulier de ces antennes permet que les ondes radiofréquences entre l'une des antennes d'un terminal et l'une des antennes d'un autre terminal soient transmises sans atténuation, due aux supports sur lesquels sont positionnées ces antennes, procurant ainsi une stabilité du bilan de liaison radio entre ces terminaux et ce, quelles que soient les positions relatives des supports.

Selon un mode de réalisation du terminal, les moyens pour mesurer le niveau de puissance d'un signal reçu par chaque antenne et les moyens pour sélectionner l'une de ces antennes comme antenne de réception sont activés dès la synchronisation du terminal esclave.

Ainsi, un mécanisme de sélection d'antennes, comparable au mécanisme de diversité d'antennes défini par la norme DECT, est mis en oeuvre lorsqu'un signal de balise est reçu et ce, dès la synchronisation d'un terminal esclave alors que le mécanisme de diversité d'antennes selon la norme DECT est inopérant tant qu'une communication n'est pas établie entre les terminaux.

Avantageusement, les moyens pour mesurer le niveau de puissance d'un signal reçu par chaque antenne et les moyens pour sélectionner l'une de ces antennes comme antenne de réception sont utilisés à chaque réception d'un signal par le terminal conférant ainsi un caractère dynamique à ce mécanisme de sélection d'antennes. Ceci est avantageux car la réception d'un signal par l'antenne sélectionnée comme antenne de réception est optimale quelles que soient les positions relatives des supports et ce à chaque déplacement imprévisible de l'un, de l'autre ou des deux supports.

selon un mode de réalisation, l'antenne de réception sélectionnée est utilisée pour l'émission d'un signal.

Ce mode de réalisation est avantageux car la sélection de l'antenne de réception étant faite dynamiquement pour recevoir chaque signal de manière optimale, l'émission par ce terminal d'un signal suite à la réception d'un autre signal, scénario classique en communication, permet d'optimiser que l'émission de ce signal soit faite aussi dans des conditions optimales du fait que le support portant le terminal récepteur a très peu de chance de se déplacer entre la réception et l'émission d'un signal.

Selon un mode de réalisation, le terminal étant destiné à être porté par une personne et ledit terminal étant équipé de deux antennes, l'une des antennes est déportée sur une épaule de ladite personne et l'autre antenne est positionnée sur le poitrail de ladite personne.

Ainsi, l'antenne déportée sur l'épaule permet de couvrir la zone d'ombre de l'antenne située sur le poitrail de la personne, zone située essentiellement derrière la personne et réciproquement l'antenne située sur le poitrail de la personne permet de couvrir la zone d'ombre de l'antenne située sur l'épaule de la personne, zone située essentiellement devant la personne.

Selon une variante de ce mode de réalisation, l'antenne déportée sur l'épaule est inclinée par rapport à la verticale d'un angle au plus égal à 45 degrés et l'antenne positionnée sur le poitrail de la personne est solidaire du terminal et est maintenue en position verticale.

Ceci est avantageux pour permettre à l'antenne déportée de ne pas être en contact avec le sol ou gêner la personne lorsque celle-ci est allongée sur le sol ou rampe sur le sol.

De plus, un tel positionnement des deux antennes permet que, quel que soit le côté observé de la personne debout, au moins l'une des deux antennes soit toujours visible d'une antenne portée par une autre personne.

Préférentiellement, l'antenne déportée est une antenne dipôle. Ce type d'antenne permet d'obtenir une déformation du diagramme de rayonnement de l'antenne réduite par rapport par exemple à une antenne de type patch, plus sensible à la proximité du support.

Selon un mode de réalisation du terminal, le terminal étant prévu pour diffuser un signal de balise, ledit signal de balise est systématiquement émis sur l'antenne dudit terminal qui est la plus dégagée du support.

Les caractéristiques de l'invention mentionnées ci-dessus, ainsi que d'autres, apparaîtront plus clairement à la lecture de la description suivant d'un exemple de réalisation, ladite description étant faite en relation avec les dessins joints, parmi lesquels:

La Fig. 1 représente le principe de l'accès multiple par division de temps,

La Fig. 2 représente schématiquement les échanges protocolaires entre deux terminaux qui sont requis par la norme DECT préalablement à la mise en oeuvre du mécanisme de diversité d'antennes et de *timing advance*,

La Fig. 3 représente schématiquement l'évolution temporelle d'une trame DECT à préambule normal,

La Fig. 4 représente schématiquement l'évolution temporelle d'une trame DECT à préambule long,

La Fig. 5 est un chronogramme qui illustre la transmission d'une trame entre un terminal maître TM et un terminal esclave TE distant l'un de l'autre

La Fig. 6 illustre le problème de limitation de l'utilisation du mécanisme de diversité d'antennes défini par la norme DECT lorsque les distances entre terminaux deviennent importantes,

La Fig. 7 représente un exemple d'un système de communication par onde radiofréquence.

La Fig. 8 représente un exemple de positionnement des antennes d'un terminal porté par une personne PE,

La Fig. 9 représente schématiquement l'évolution temporelle d'une trame DECT à préambule long selon l'invention,

La Fig. 10 illustre la démodulation par le terminal TM d'une trame préalablement émise par le terminal TE selon l'invention dans le cas où la distance entre les deux terminaux augmente, et

La Fig. 11 représente la mesure RSSI obtenue en fonction du moment d'activation de la démodulation (au bit -16 ou au bit 0).

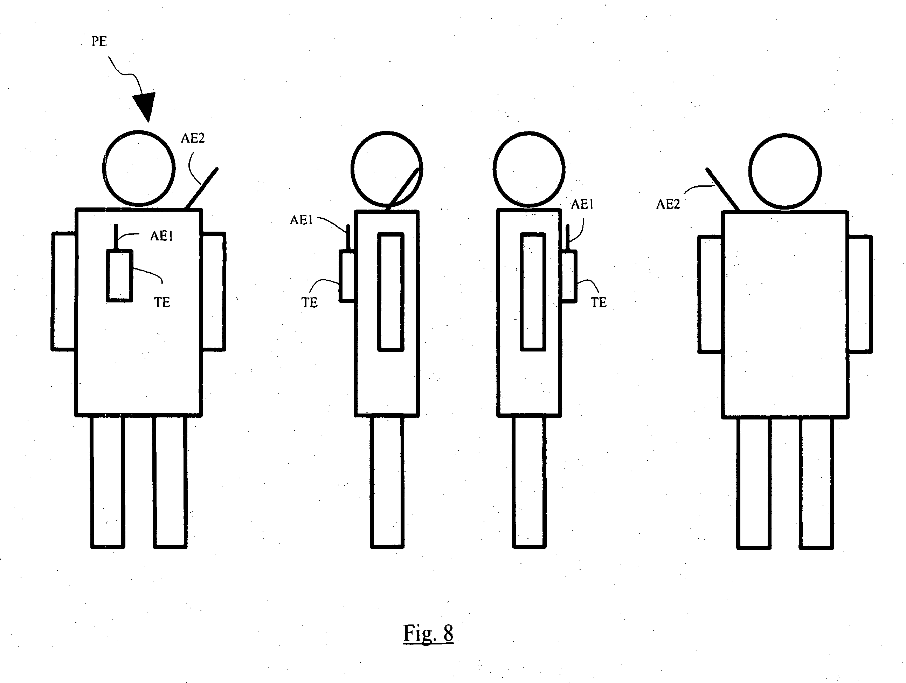

La Fig. 8 représente un exemple de positionnement d'antennes sur une personne PE selon l'invention.

Les quatre vues de la personne PE sont représentées à la Fig. 8. Celle la plus à gauche est la vue de face. On y voit le terminal TE, une première antenne AE1 et une seconde antenne AE2 qui sont positionnées sur des parties de la personne PE de manière à ce que chaque zone d'ombre de chaque antenne qui est provoquée par une partie du corps de la personne, tête, poitrail, est couverte par une autre antenne du terminal TE.

De préférence, l'antenne AE2 est déportée sur une épaule de la personne PE, en l'occurrence la gauche, et l'antenne AE1 est positionnée sur le poitrail de la personne PE.

Selon la variante du mode de réalisation représenté à la Fig. 8, l'antenne AE2 qui est déportée sur l'épaule est inclinée par rapport à la verticale d'un angle au plus égal à 45 degrés tandis que l'antenne AE1 est maintenue en position verticale et est solidaire du terminal TE.

De préférence, l'antenne AE2 est une antenne dipôle.

Selon un mode de réalisation, l'antenne de réception sélectionnée suite à la réception par un terminal d'un signal de trafic est utilisée pour l'émission d'un signal de trafic par ce terminal.

Le terminal TE est équipé de moyens MES pour mesurer le niveau de puissance d'un signal reçu par chaque antenne AE1 et AE2 et de moyens SEL pour sélectionner l'une de ces deux antennes AE1 et AE2 comme antenne de réception par comparaison des niveaux de puissance mesurés. Les moyens MES et SEL, qui forment un mécanisme de sélection d'antennes, sont activés à chaque réception d'un signal par le terminal TE et ce dès la synchronisation du terminal TE avec un terminal maître.

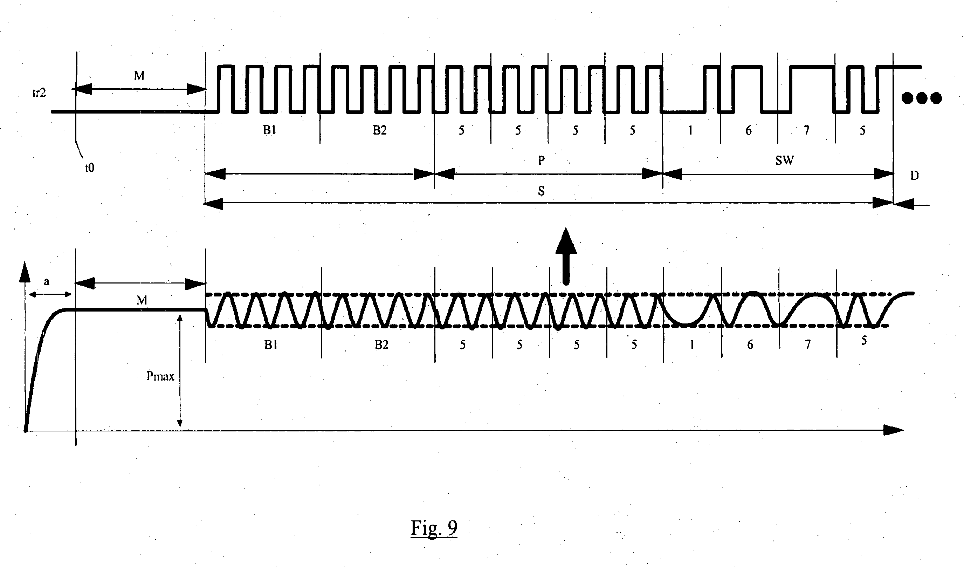

La Fig. 9 représente schématiquement l'évolution temporelle d'une trame DECT à préambule long selon l'invention. En haut de la Fig. 9 est représentée la version numérique de la trame DECT démodulée tandis que en bas de la Fig. 9 est représentée la version analogique de la trame DECT démodulée.

Chaque terminal, esclave TE ou maître TM, comporte des moyens MM pour maintenir à une valeur constante le niveau de puissance d'émission de trame à préambule long pendant une durée M, dite de maintien. Cette valeur constante est définie de manière à ce que la mesure RSSI, réalisée sur une antenne pendant une partie de la durée de maintien M égale à la durée d'un octet du préambule long, est équivalente à la mesure du niveau de puissance d'un signal reçu qui serait réalisée sur cette antenne à partir d'un octet du préambule long. De préférence, la valeur constante est égale à la valeur de puissance d'émission maximale de la trame $P_{max}$.

La durée de maintien M est égale à deux fois la durée de propagation d'une onde entre le terminal esclave TE et un terminal maître TM situés l'un de l'autre à une distance maximale prédéterminée $D_{max}$, augmentée de la durée de propagation $tf$ dans les circuits radiofréquence. Mathématiquement parlant, $M = 2* \Delta T_d +$

$tf$ avec $\Delta T_d = \dfrac{D_{max}}{v}$.

De plus, chaque terminal TE ou TM comporte des moyens EM pour émettre pendant la durée de maintien M, un signal dont le niveau de puissance est égal à ladite valeur constante.

A la Fig. 9 est représentée une trame TR2 émise par un terminal esclave TE en réponse à une trame TR1 qu'il a reçue préalablement du terminal maître TM. Dans le cas d'émission d'une trame TR1 par le terminal maître TM, l'évolution temporelle de la trame TR1 est similaire à celle représentée par la Fig. 9. Seules les valeurs des mots changent, tel que cela est expliqué dans la partie introductive.

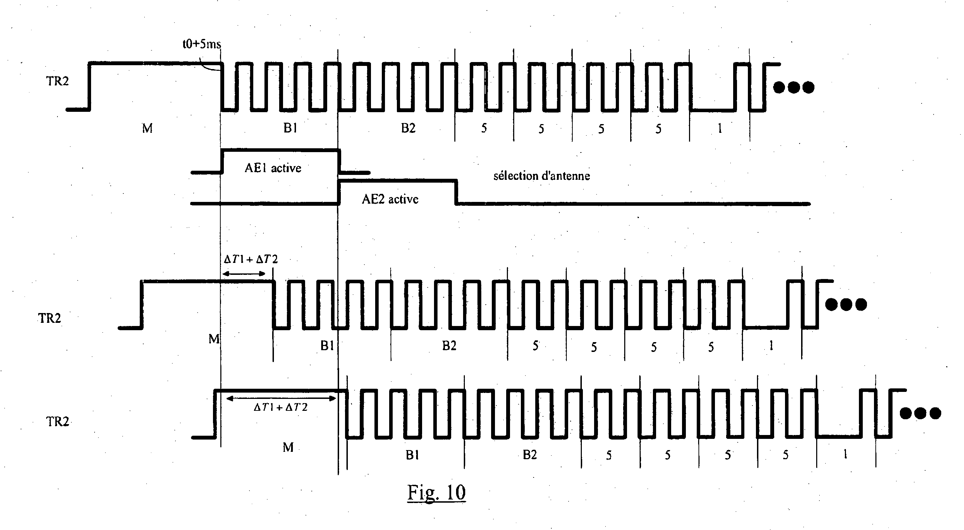

La Fig. 10 illustre la démodulation par le terminal TM d'une trame préalablement émise par le terminal TE selon l'invention. On constate que le mécanisme de diversité d'antennes reste opérationnel lorsque la distance entre terminaux devient importante.

En haut de la Fig. 10 est représenté le cas où le terminal esclave TE est proche du terminal maître TM et émet une trame TR2 à l'instant t1 égal ici à t0+5ms du fait que le retard de propagation $\Delta T1$ n'a pas une valeur significative. La mesure du niveau de puissance sur l'antenne AE1 est alors basée sur l'octet B1 et la mesure du niveau de puissance sur l'antenne AE2 est basée sur l'octet B2. Les mesures RSSI sont correctes.

Lorsque le terminal esclave TE et le terminal esclave TE s'éloignent l'un de l'autre et que le terminal esclave TE émet la trame TR2 à l'instant t1=t0+$\Delta T1$ +5ms, les valeurs de $\Delta T1$ et de $\Delta T2$ augmentent et le cumul de ces retards de propagation des ondes devient significatif. Ainsi, la trame TR2, émise par le terminal esclave TE va être reçue à l'instant t0+ $\Delta T1$ + $\Delta T2$ + 5ms et non plus à l'instant t0+5ms comme s'y attend le terminal maître TM. Le niveau de puissance sur l'antenne AE1 est alors mesuré à partir d'une partie des bits de l'octet B1 et d'une partie de la durée de maintien M. Les mesures RSSi, et en particulier celles sur l'antenne AE1, sont correctes et le mécanisme de diversité d'antennes de la norme DECT reste opérationnel.

Le terminal esclave TE s'éloigne encore du terminal TM et émet la trame TR2. Les valeurs de $\Delta T1$ et de $\Delta T2$ augmentent en conséquence jusqu'à ce que aucun bit de l'octet B1 ne participe à la mesure du niveau de puissance sur l'antenne AE1. Le niveau de puissance sur l'antenne AE1 est alors mesuré pendant une grande partie de la durée de maintien M et donne une mesure non nulle malgré que la distance entre les terminaux est supérieure à la distance maximale de fonctionnement du mécanisme de diversité d'antennes qui est défini par la norme DECT.

Le mécanisme de diversité d'antennes reste donc opérationnel à des distances supérieures à cette distance maximale définie par la norme DECT.

Un signal transmis par un réseau de communication est modulé en fréquence côté émetteur et démodulé côté récepteur. Dans le cas de la norme DECT, la démodulation d'une trame à préambule long débute à partir de l'instant fixé au premier bit du préambule long c'est-à-dire dès le bit -16 de la trame, instant fixé lorsque la distance entre terminaux est nulle.

Selon l'invention, chaque terminal comporte des moyens DS pour contraindre la démodulation d'une trame à préambule long de signal reçue à débuter à partir d'un instant fixé au premier bit du préambule normal de la trame lorsque la distance entre les deux terminaux est nulle.

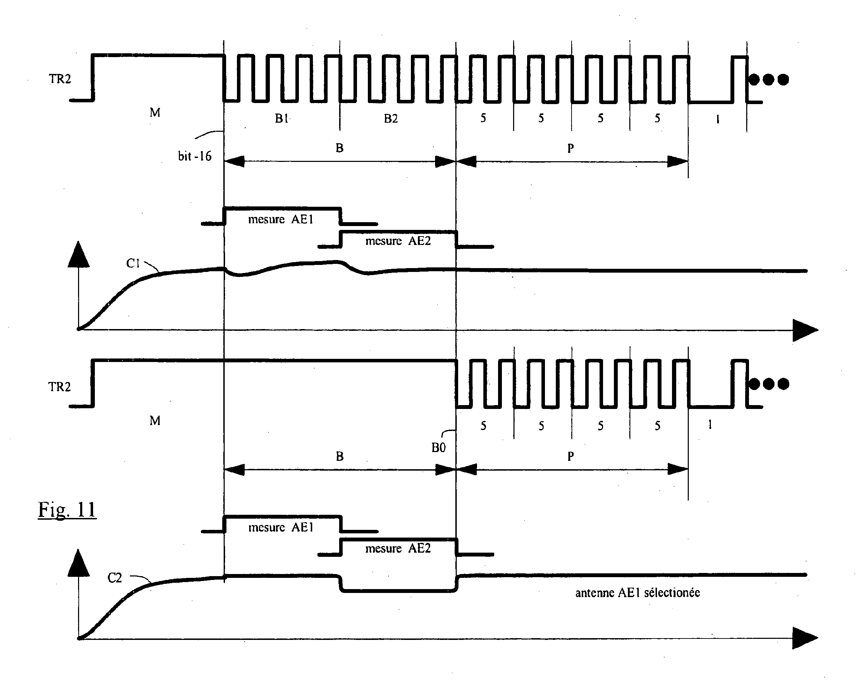

A la Fig. 11, une trame TR2 démodulée par le terminal maître TM est représentée ainsi que l'activation de l'antenne AE1 et AE2.

La courbe C1 représente l'évolution temporelle des niveaux de puissance relatifs à la trame TR1 qui sont reçus sur les antennes, c'est-à-dire l'évolution temporelle des mesures RSSI. On constate que la puissance s'établit normalement selon un arc d'une exponentielle puis est perturbée à partir de l'instant fixé par le premier bit du préambule long noté bit -16 c'est-à-dire dès que la démodulation de la trame TR2 est activée.

La courbe C2 représente l'évolution temporelle des niveaux de puissance relatifs à la trame TR2 qui sont reçus sur les antennes, c'est-à-dire l'évolution temporelle des mesures RSSI lorsque les moyens DS sont mis en oeuvre. On constate que la puissance s'établie normalement selon un arc d'une exponentielle et reflète correctement la puissance du signal reçue sur chaque antenne en différenciant les deux niveaux de puissance reçus. Selon l'exemple donné, l'antenne AE1 est sélectionnée pour recevoir la trame TR1.

## Revendications

**1.** Terminal mobile d'un système de communication par onde radiofréquence de type DECT, ledit terminal étant équipé d'une pluralité d'antennes et comportant des moyens (MES) pour mesurer le niveau de puissance d'un signal reçu par chacune de ses antennes, **caractérisé en ce qu'**il comporte des moyens (MM) pour maintenir le niveau de la puissance d'émission de trame à préambule long d'un signal à émettre à une valeur constante pendant une durée (M), dite de maintien, et des moyens (EM) pour émettre ledit signal pendant ladite durée de maintien, ladite durée de maintien étant égale à deux fois la durée de propagation d'une onde entre ledit terminal et un autre terminal situés l'un de l'autre à une distance maximale prédéterminée, augmentée de la durée de propagation dans les circuits radiofréquence, et ladite valeur constante étant définie telle que la mesure dudit signal reçu sur une antenne pendant une partie de la durée de maintien égale à la durée d'un octet du préambule long est équivalente à la mesure du niveau de puissance d'un signal reçu qui serait réalisée à partir d'un octet du préambule long.

**2.** Terminal selon la revendication 1, dans lequel ladite valeur constante est égale à la valeur de la puissance d'émission maximale de trame.

**3.** Terminal selon l'une des revendications précédentes, qui comporte des moyens (DS) pour contraindre la démodulation d'une trame à préambule long de signal reçue à débuter à partir de l'instant fixé au premier bit du préambule normal de la trame, instant défini quand la distance entre terminaux est nulle.

**4.** Terminal selon l'une des revendications précédentes, dans lequel ledit terminal comporte des moyens (SEL) pour sélectionner l'une de ces antennes comme antenne de réception par comparaison des niveaux de puissance ainsi mesurés, les moyens (MES) pour mesurer le niveau de puissance d'un signal reçu par chaque antenne et les moyens (SEL) pour sélectionner l'une de ces antennes comme antenne de réception étant activés dès la synchronisation dudit terminal.

**5.** Terminal selon la revendication 4, dans lequel les antennes sont positionnées sur des parties dudit support de manière à ce que chaque zone d'ombre de chaque antenne qui est provoquée par une partie du support est couverte par une autre antenne dudit terminal.

**6.** Terminal selon la revendication 4 ou 5, dans lequel les moyens (MES) pour mesurer le niveau de puissance d'un signal reçu par chaque antenne et les moyens (SEL) pour sélectionner l'une de ces antennes comme antenne de réception sont utilisés à chaque réception d'un signal par le terminal.

**7.** Terminal selon l'une des revendications 4 à 6, dans lequel l'antenne de réception sélectionnée est utilisée pour l'émission d'un signal.

**8.** Terminal selon l'une des revendications précédentes, dans lequel le terminal étant destiné à être porté par une personne et ledit terminal étant équipé de deux antennes, l'une des antennes (AE2) est déportée sur une épaule de ladite personne et l'autre antenne (AE1) est positionnée sur le poitrail de ladite personne.

**9.** Terminal selon la revendication 8, dans lequel l'antenne déportée sur l'épaule (AE2) est inclinée par rapport à la verticale d'un angle au plus égal à 45 degrés et l'antenne (AE1) positionnée sur le poitrail de la personne est solidaire du terminal et maintenue en position verticale.

**10.** Terminal selon l'une des revendications 8 à 9, dans lequel l'antenne déportée équipant le terminal est une antenne dipôle.

**11.** Terminal selon l'une des revendications précédentes, dans lequel ledit terminal étant prévu pour diffuser un signal de balise, ledit signal de balise est systématiquement émis sur l'antenne dudit terminal qui est la plus dégagée du support.

**12.** Système de communication par onde radiofréquence entre terminaux de communication mobile, **caractérisé en ce que** chaque terminal est conforme à l'une des revendications 1 à 11.

**Patentansprüche**

**1.** Mobiles Endgerät eines Kommunikationssystems über Radiofrequenz-Wellen vom DECT-Typ, wobei das Endgerät mit einer Mehrzahl von Antennen ausgestattet ist, und Vorrichtungen (MES) zur Messung des Leistungsniveaus eines Signals, welches von jeder seiner Antennen empfangen worden ist, umfasst, **dadurch gekennzeichnet, dass** es Vorrichtungen (MM) zum Aufrechterhalten des Leistungsniveaus einer Aussendung eines Rasters mit langem Vorspann eines abzustrahlenden Signals mit einem konstanten Wert während einer Zeitdauer (M), genannt der Aufrechterhaltung, und Vorrichtungen (EM) zur Abstrahlung des Signals während der Aufrechterhaltungsdauer umfasst, wobei die Aufrechterhaltungsdauer gleich ist zweimal der Dauer der Ausbreitung einer Welle zwischen dem Endgerät und einem anderen Endgerät, die zueinander in einer maximalen vorher bestimmten Entfernung liegen, erhöht um die Dauer der Ausbreitung in den Radiofrequenzschaltungen, und wobei der konstante Wert dergestalt definiert ist, dass das Messergebnis des auf einer Antenne empfangenen Signals während eines Teils der Aufrechterhaltungsdauer entsprechend der Dauer eines Oktetts des langen Vorspanns gleich ist dem Messergebnis des Leistungsniveaus eines Signals, welche zu Beginn eines Oktetts des langen Vorspanns durchgeführt worden ist.

**2.** Endgerät nach Anspruch 1, in dem der konstante Wert gleich dem Wert der maximalen Sendeleistung des Rasters ist.

**3.** Endgerät nach einem der vorhergehenden Ansprüche, welches Vorrichtungen (DS) zum Beschränken der Demodulation des empfangenen Signals eines Rasters mit langem Vorspann beginnend mit dem beim ersten Bit des normalen Vorspanns des Rasters festgelegten Zeitpunkt umfasst, wobei der Zeitpunkt definiert ist, wenn der Abstand zwischen den Endgeräten Null ist.

4. Endgerät nach einem der vorhergehenden Ansprüche, in dem das Endgerät Vorrichtungen (SEL) umfasst, um eine der Antennen als Empfangsantenne durch Vergleichen der auf diese Weise gemessenen Leistungsniveaus auszuwählen, wobei die Vorrichtungen (MES) zur Messung des Leistungsniveaus eines Signals, welches von jeder Antenne empfangen worden ist, und die Vorrichtungen (SEL) zur Auswahl einer der Antennen als Empfangsantenne von der Synchronisation des Endgeräts an eingeschaltet sind.

5. Endgerät nach Anspruch 4, in dem die Antennen auf Teilen des Trägers dergestalt angeordnet sind, dass jeder Schattenbereich jeder Antenne, der durch einen Teil des Trägers hervorgerufen ist, durch eine andere Antenne des Endgeräts abgedeckt ist.

6. Endgerät nach Anspruch 4 oder 5, in dem die Vorrichtungen (MES) zur Messung des Leistungsniveaus eines empfangenen Signals durch jede Antenne und die Vorrichtungen (SEL) zur Auswahl einer der Antennen als Empfangsantenne bei jedem Empfang eines Signals durch das Endgerät verwendet werden.

7. Endgerät nach einem der Ansprüche 4 bis 6, bei dem die ausgewählte Empfangsantenne zur Abstrahlung eines Signals verwendet wird.

8. Endgerät nach einem der vorhergehenden Ansprüche, in dem das Endgerät dazu bestimmt ist, von einer Person getragen zu werden und das Endgerät mit zwei Antennen ausgerüstet ist, wobei eine der Antennen (AE2) auf eine Schulter der Person verlagert ist, und die andere Antenne (AE1) auf der Brust der Person angeordnet ist.

9. Endgerät nach Anspruch 8, in dem die auf die Schulter verlagerte Antenne (AE2) im Bezug auf die Senkrechte um einen Winkel von mehr als 45 Grad geneigt ist, und die auf der Brust der Person angebrachte Antenne (AE1) mit dem Endgerät verbunden und in senkrechter Stellung gehalten ist.

10. Endgerät nach einem der Ansprüche 8 bis 9, in dem die verlagerte Antenne des Endgeräts eine Dipol-Antenne ist.

11. Endgerät nach einem der vorhergehenden Ansprüche, in dem das Endgerät dazu vorgesehen ist, ein Leitsignal auszustrahlen, wobei das Leitsignal systematisch auf der Antenne des Endgeräts ausgestrahlt wird, welche am weitesten von dem Träger entfernt ist.

12. Kommunikationssystem über Radiofrequenzwellen zwischen mobilen Kommunikationsendgeräten, **da-** **durch gekennzeichnet, dass** jedes Endgerät einem der Ansprüche 1 bis 11 entspricht.

**Claims**

1. Mobile terminal of a system for communication via radiofrequency waves of the DECT type, the terminal being provided with a plurality of antennae and comprising means (MES) for measuring the power level of a signal received by each of the antennae thereof, **characterised in that** it comprises means (MM) for maintaining the level of the transmission power of a long-preamble frame of a signal to be transmitted at a constant value for a time (M), referred to as a maintenance time, and means (EM) for transmitting the signal during the maintenance time, the maintenance time being equal to two times the propagation time of a wave between the terminal and another terminal which are located at a predetermined maximum distance from each other, increased by the propagation time in the radiofrequency circuits, and the constant value being defined such that the measurement of the signal received at an antenna during a portion of the maintenance time equal to the duration of an octet of the long preamble is equivalent to the measurement of the power level of a signal received which would be produced from an octet of the long preamble.

2. Terminal according to claim 1, wherein the constant value is equal to the value of the maximum transmission power of a frame.

3. Terminal according to either of the preceding claims, which comprises means (DS) for constraining the demodulation of a long-preamble frame of a signal received to be started from the time fixed at the first bit of the normal preamble of the frame, wherein the time is defined when the distance between terminals is zero.

4. Terminal according to any one of the preceding claims, wherein the terminal comprises means (SEL) for selecting one of those antennae as the reception antenna by comparison of the power levels measured in this manner, the means (MES) for measuring the power level of a signal received by each antenna and the means (SEL) for selecting one of those antennae as the reception antenna being activated as soon as the terminal is synchronised.

5. Terminal according to claim 4, wherein the antennae are positioned on portions of the support in such a manner that each shadow region of each antenna which is brought about by a portion of the support is covered by another antenna of the terminal.

**6.** Terminal according to claim 4 or 5, wherein the means (MES) for measuring the power level of a signal received by each antenna and the means (SEL) for selecting one of those antennae as the reception antenna are used each time a signal is received by the terminal.

**7.** Terminal according to any one of claims 4 to 6, wherein the reception antenna selected is used for transmitting a signal.

**8.** Terminal according to any one of the preceding claims, wherein, the terminal being intended to be carried by a person is provided with two antennae, one of the antennae (AE2) is offset on a shoulder of the person and the other antenna (AE1) is positioned on the chest of the person.

**9.** Terminal according to claim 8, wherein the antenna which is offset on the shoulder (AE2) is inclined relative to the vertical about an angle which is at a maximum equal to 45 degrees and the antenna (AE1) which is positioned on the chest of the person is fixedly joined to the terminal and maintained in a vertical position.

**10.** Terminal according to either of claims 8 or 9, wherein the offset antenna with which the terminal is provided is a dipole antenna.

**11.** Terminal according to any one of the preceding claims, wherein, the terminal being provided to distribute a beacon signal, the beacon signal is systematically transmitted on the antenna of the terminal which is most unobstructed by the support.

**12.** System for communication via radiofrequency waves between mobile communication terminals, **characterised in that** each terminal is in accordance with any one of claims 1 to 11.

trame TDMA

| s0 | | | sn | | | | | | | s23 |

sn+12

**Fig. 1**

TM                                                    TE

1

2

3

4

**Fig. 2**

EP 2 141 827 B1

Fig. 3

Fig. 4

Fig. 5

Fig. 6

Fig. 7

Fig. 8

EP 2 141 827 B1

Fig. 9

Fig. 10

EP 2 141 827 B1

Fig. 11

**EP 2 141 827 B1**

## RÉFÉRENCES CITÉES DANS LA DESCRIPTION

**Documents brevets cités dans la description**

- WO 9602984 A